# EUROPÄISCHE PATENTANMELDUNG

(11) **EP 1 619 345 A2**
(43) Veröffentlichungstag der Anmeldung: **25.01.2006**
(21) Anmeldenummer: 05014039.1
(22) Anmeldetag: 29.06.2005
(51) Int. Cl.: E06B 5/16, A62C 2/06, C09K 21/00, E04B 1/94

(54) **Intumeszierende Klippprofile für Brandschutzeinrichtungen**

(30) Priorität: 23.07.2004 AT 12612004
(71) Anmelder: INTUMEX GmbH, 4021 Linz (AT)
(72) Erfinder: Horacek, Heinrich, 4040 Linz (AT); Lüdecke, Bernhard, 4060 Leonding (AT); Kerl, Thomas, 4202 Kirchschlag (AT)
(74) Vertreter: Lindinger, Ingrid

(57) **Zusammenfassung**

Intumeszierende, gegen Umwelteinflüssen unempfindliche, volle Klippprofile, dadurch gekennzeichnet, dass sie aus einem intumeszierenden Material (A) bestehen, das eine Kombination von gegen Umwelteinflüsse unempfindlichen Intumeszenzadditiven; Flammhemmern und Thermoplasten enthält, wobei das Ganze oder Teile des Klippprofils aus dem intumeszierenden Material bestehen und deren Verwendung in Brandschutzeinrichtungen.

## Beschreibung

Die Erfindung betrifft intumeszierende Klippprofile für Brandschutzeinrichtungen, die als Vollprofile ausgestaltet sind, sowie deren Herstellung und Verwendung.

Stand der Technik ist die Herstellung und Verwendung von harten, hohlen Klippprofilen, die vermittels Extrusion hergestellt werden, anschließend mit intumeszierenden, gegen Umwelteinflüssen empfindliche Materialien gefüllt werden und luftdicht verschlossen werden.
Solche Ummantelungen werden beispielsweise in EP 0 509 701 B1, GB 2 079 669 A oder DE 30 19 507 A1 beschrieben.
AT 367 158 beschreibt ein elastisches Dichtungsprofil mit einer intumeszierenden Einlage.
DE 30 19 507 A1 und AT 367 158 beschreiben dabei auch das Nut- und Feder-Prinzip, die intumeszierenden Einlagen werden aber nachträglich eingeschoben und die Einlagen bestehen aus gegen Umwelteinflüssen empfindlichem Natriumsilikat.
Entsprechend den Abmessungen der Brandschutzeinrichtungen werden diese Dichtungsprofile abgelängt, an den Schnittstellen wieder luftdicht verschlossen und in dafür vorgesehene Nuten geklippt.
Im Brandfalle erweicht die starre Umhüllung, die intumeszierenden Materialien beginnen zu expandieren und bilden eine Heißgasdichtung.

Aufgabe der vorliegenden Erfindung war es, intumeszierende Dichtungsprofile für Brandschutzeinrichtungen zu finden, die gegen Umwelteinflüsse unempfindlich sind und die in einem Arbeitsschritt gefertigt werden können.

Unerwarteterweise konnte diese Aufgabe durch die Kombination von gegen Umwelteinflüsse unempfindlichen Intumeszenzadditiven und Bindemitteln bzw. Thermoplasten gelöst werden, die zu einem vollen Klippprofil ausgestaltet werden.

Gegenstand der vorliegenden Erfindung sind demnach intumeszierende, gegen Umwelteinflüsse unempfindliche, volle Klippprofile, die dadurch gekennzeichnet sind, dass sie aus einem intumeszierenden Material bestehen, das eine Kombination von gegen Umwelteinflüsse unempfindlichen Intumeszenzadditiven, Flammhemmern und Thermoplasten enthält, wobei das Ganze oder Teile des Klippprofils aus dem intumeszierenden Material bestehen.

Die erfindungsgemäßen Klippprofile bestehen aus einem intumeszierenden Material, das eine Kombination aus gegen Umwelteinflüsse unempfindlichen Intumeszenzadditiven, Flammhemmern und Thermoplasten enthält.

Als gegen Umwelteinflüsse unempfindliche Intumeszenzadditive finden dabei V-Graphite, V-Vermikulite, Rohvermikulit und Gemische derselben, sowie Umsetzungsprodukte bzw. Gemische aus Melamin bzw. Melaminverbindungen, Phosphaten und mehrwertigen Alkoholen Verwendung.
Unter Melaminverbindungen sind dabei beispielsweise Melaminphosphate, Melaminbicyclopentaerythritphosphat, Dimelamindipentaerythritdiphosphat und Melamindipentatriphosphat zu verstehen.
Als Phosphate kommen beispielsweise Ammoniumpolyphosphat,.und Bicyclopentaerythritphosphat in Frage.
Geeignete mehrwertige Alkohole sind beispielsweise Pentaerythrit, Dipentaerythrit (DPER), Sorbit, Mannit, Dulcit, Glycerin oder Inosit.
Bevorzugt wird V-Graphit, Rohvermikulit oder ein Gemisch aus Ammoniumpolyphosphat (APP), Melamin oder Melaminphosphat und DPER eingesetzt.

Als Thermoplast bzw. Bindemittel kommen sowohl harte Thermoplaste, wie etwa Hart-PVC, Polypropylen, Polyethylen, Acryl-Butadien-Styrol-Copolymere (ABS), Polymethylmetacrylat oder Polystyrol, als auch weiche Bindemittel bzw. Thermoplaste, wie Weich-PVC, Ethylenvinylacetat (EVA), SBR-Kautschuke, thermoplastische Olefine (TPO's), Pebax, Santoprene, Kariflex und Polybutadiene, in Frage.

Daneben werden halogenfreie Flammhemmer aus der Gruppe der Phosphorverbindungen, wie Ethylendiaminphosphat (EDAP), sek. Guanidinphosphat (GP), Ammoniumdihydrogenphosphat, Ammoniumpolyphosphat, Piperazinphosphat, u.s.w., oder V-Graphit, eingesetzt.

Weiters können noch anorganische Pigmente zugesetzt werden, teils zur geeigneten Farbpigmentierung, wie Eisenoxide, Titanoxid, Ruß u.s.w., teils um den Anteil an anorganischen Komponenten zu erhöhen, wie Kaolin, Kreide, Calciumsilikate (z.B. β-Wollastonit), Calciumsulfate, Gips, Gipshalbhydrat und Tone.
Die intumeszierenden Masse setzt sich dabei aus 40 - 75 Gew.% an Bindemittel bzw. Thermoplaste, 20 - 40Gew.% an Intumeszenzadditiven, 5 - 30 Gew.% an Flammhemmer und 0 - 15 Gew. % an anorganischen Pigmenten zusammen.
Bevorzugt enthält die intumeszierende Masse 40 bis 60 Gew.% an Bindemittel bzw. Thermoplaste, 25 - 35 Gew.% an Intumeszenzadditiven, 8 - 20 Gew.% an Flammhemmer und 5 - 15 Gew. % an anorganischen Pigmenten.

Die erfindungsgemäßen vollen Klippprofile können dabei zur Gänze aus dem intumeszierenden Material bestehen, sie können jedoch auch aus zwei oder mehreren Teilen bestehen, wobei nur ein Teil A Intumeszenz zeigt und der andere Teil (Teil B) bzw. die anderen Teile (B, C,...) keine Intumeszenzadditive enthalten. Bevorzugt weist das Klippprofil höchstens 2 Teile ohne Intumeszenzadditive auf, besonders bevorzugt nur einen Teil ohne Intumeszenzadditive.

Besteht das erfindungsgemäße Klippprofil aus mehreren Teilen, so können die Teile in abgestuften Härteeinstellungen vorliegen.
Die Härteeinstellungen für die nicht intumeszierende Teile B, C, usw. hängt vom verwendeten Thermoplasten ab und kann demnach entweder hart oder weich sein. Auch beim intumeszierenden Teil A ist der verwendete Thermoplast für die Härte ausschlaggebend.

Es können demnach beispielsweise bei einem zweiteiligen Aufbau der Klippprofile folgende Kombinationen von Teil B und Teil A vorliegen:
Teil B/Teil A:
Hart/Hart intumeszierend
Weich/ Hart intumeszierend

Bevorzugt bestehen der intumeszierende Teil und die nicht intumeszierenden Teile aus den gleichen oder aus nahe verwandten bzw. verträgliche Kunststoffen, oder es werden Verträglichkeitsvermittler, wie etwa Blockcopolymere zugesetzt.

Der nicht intumeszierende Teil kann dabei neben dem Thermoplasten noch oben angeführte anorganische Pigmente und/oder Flammhemmer enthalten.

Die nicht intumeszierenden Teile bestehen dabei aus 50 - 100 Gew. % an Thermoplast, 0 - 20 Gew.% an anorg. Pigment und 0 -30 Gew.% an Flammhemmer. Bevorzugt setzen sie sich aus 70 bis 100 Gew. % an Thermoplast, 2 - 10 Gew.% an anorg. Pigment und 0 -20 Gew.% an Flammhemmer zusammen.

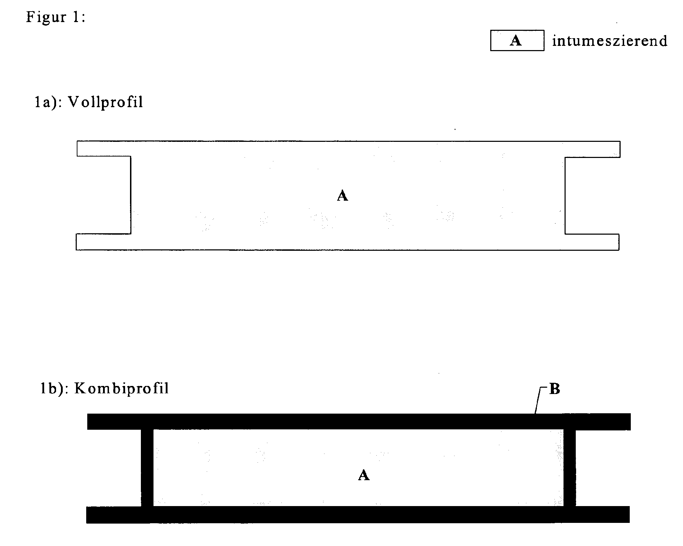

Die erfindungsgemäßen Klippprofile werden nach dem Nut-Feder-Prinzip ausgestaltet.
Ein Vorteil der erfindungsgemäßen vollen Klippprofile ist dabei die vielseitigere Gestaltungsmöglichkeit. Im Prinzip ist jede Nut- Feder- Klippvorrichtung möglich. Einige Beispiele sind aus den Fig. 1-3 ersichtlich.

Die Herstellung der erfindungsgemäßen Klippprofile erfolgt durch Extrusion bzw. durch Koextrusion, falls die Klippprofile zwei- bzw. mehrteilig ausgestaltet sind.

Der Vorteil der erfindungsgemäßen Vollprofile ist dabei darin zu sehen, dass sie in einem Arbeitsschritt gefertigt werden und nicht nachträglich gefüllt werden müssen.

Außerdem sind Fehler bei der Herstellung kaum möglich, da die verwendeten Materialien gegen Umwelteinflüsse unempfindlich sind, und keine Abdeckung eine visuelle Überprüfung unmöglich macht.
Weiters ist es von Vorteil, dass bei der Herstellung der erfindungsgemäßen Vollprofile kein Kalibierwerkzeug benötigt wird, wie dies im Falle von bisher üblichen Hohlprofilen notwendig war.

Die erfindungsgemäßen vollen Klippprofile eignen sich hervorragend für den Einsatz in Brandschutzeinrichtungen, wie etwa Brandschutztüren, -fenster, -klappen usw. bzw. allgemein Brandschutzfugen und zeichnen sich dabei durch ihre Unempfindlichkeit gegenüber Umwelteinflüssen, wie etwa Feuchtigkeit, CO₂, Atmosphäre usw. aus. Im Brandfall füllt das intumeszierende Material den Dichtspalt ab und verzögert dadurch das Durchdringen von Feuer und Rauch erheblich.

### Beispiele:

Es wurden u.a. folgende Materialien eingesetzt:
FM 533.....Daplen, Fa. Borealis
S6.600......Polystyrol, Fa. Shell
FT7245....LDPE; Fa. Borealis
Terluran....Acrylnitril-Butadien-Styrol-Copolymeres, Fa. BASF
Evatane 28-25.......Ethylenvinylacetat (EVA), Fa. Atofina
X-69......20%Ammoniumpolyphosphat (APP), 50% Melaminphosphat, 30% Dipentaerythrit (DPER)
Ethylendiaminphosphat (EDAP)

### Beispiel 1: Vergleichsbeispiel V-1:

Als Vergleichsbeispiel wurde ein Hohlprofil aus Hart-PVC mittels Extrusion herstellt, wobei neben der geeigneten Düse auch ein Kalibrierwerkzeug benötigt wurde.

Es wurde als Hart-PVC folgende Mischung eingesetzt:

| | |
|---|---|
| 100 Teile | S-PVC (K = 67) (Suspensions-PVC) |
| 1 Teil | Ca-Stearat (als Gleitmittel) |
| 0,8 Teile | Kohlenwasserstoffwachs (als Gleitmittel) |
| 5,75 Teile | Baeropan R50536 P/1 (Stabilisator der Fa. Bärlocher) |

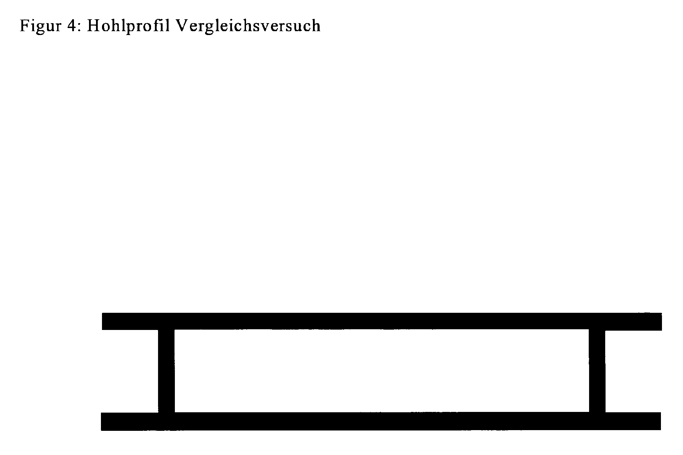

Es wurde ein gleichlaufender Zweischneckenextruder der Fa. Leistritz LSM 30.34 GL verwendet. Die Extrusionsbedingungen waren 150°C Extrusionstemperatur, 16,5kg/h Durchsatz, 40 Upm, 3m /min Profilgeschwindigkeit.
In das Hohlprofil (**siehe Fig. 4**) wurde ein Natriumsilikatstreifen eingefädelt. Er hatte ein Gewicht von 160g/m.

### Beispiele 2-6:

Als Beispiele wurden gleichgestaltige (wie in V-1) Vollprofile aus V-Graphit und verschiedenen Thermoplasten mittels Extrusion mit einer Düse ohne Kalibrierwerkzeug in einem Schritt hergestellt. **(Vollprofil gemäß Fig. 1a)**

| Beispiel | | 2 | 3 | 4 | 5 | 6 |
|---|---|---|---|---|---|---|
| | Gew% | | | | | |
| Bindemittel 867M | 50 | Hart-PVC | FM 553 | S6.600 | FT 7245 | Terluran |
| | | | | | | |
| Intumeszenzadditiv | 30 | V-Graphit | X-69 | V-Graphit | V-Graphit | V-Graphit |
| Flammhemmer | 10 | EDAP | V-Graphit | EDAP | X-69 | EDAP |
| Anorg. Pigmente | 10 | ChinaClay | ChinaClay | Wollastonit | ChinaClay | Wollastonit |

### Extrusionsbedingungen:

| | | | | | |
|---|---|---|---|---|---|
| Materialtemp. [°C] | 160 | 210 | 150 | 200 | 180 |
| Durchsatz kg/h | 42 | 35 | 33 | 34 | 35 |
| U/Minute | 50 | 60 | 45 | 50 | 60 |

### Beispiel 7 + 8:

Als Beispiele wurden gleichgestaltige (wie in V-1) Kombiprofile aus V-Graphit und verschiedenen Thermoplasten mittels Koextrusion ohne Kalibrierwerkzeug in einem Schritt hergestellt. **(Kombiprofil gemäß Fig. 1b)**

| Beispiel | | 7 | 8 |
|---|---|---|---|
| Profilteil A: intumeszierend | | | |
| | Gew.% | | |
| Bindemittel | 50 | Hart-PVC | PP |
| Intumeszenzadditiv | 30 | V-Graphit | V-Graphit |
| Flammhemmer | 10 | sek.GP | EDAP |
| Anorg. Pigmente | 10 | Wollastonit | ChinaClay |

| Profilteil B: nicht intumeszierend: | | | |
|---|---|---|---|
| Bindemittel | 95 | PVC | PP |
| Anorg. Pigmente | 5 | Ruß | Ruß |

Laufgeschw. 5m/min

### Extrusionsbedingungen:

**Extruder A:**

| | | |
|---|---|---|
| Temperatur [°C] | 130 | 150 |
| Upm | 60 | 50 |
| Durchsatz kg/h | 26 | 20 |

**Extruder B**

| | | |
|---|---|---|
| Temperatur [°C] | 150 | 170 |
| Upm | 30 | 30 |
| Durchsatz kg/h | 16,4 | 13 |

### Beispiele 9-11:

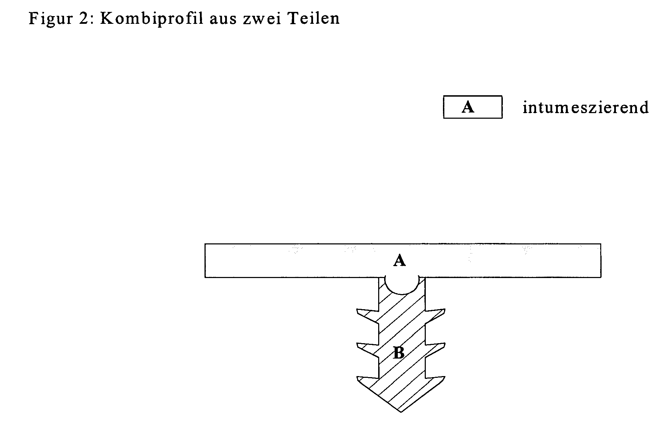

Durch Koextrusion wurden volle Klippprofile aus zwei Teilen hergestellt, bei denen nur Teil A eine Intumeszenz zeigte, und beide Teile in abgestuften Härteeinstellungen vorlagen (**Kombiprofil gemäß Figur 2**):

| Beispiel | | 9 | 10 | 11 |
|---|---|---|---|---|
| Profilteil A intumeszierend | | | | |
| | Gew.% | | | |
| Bindemittel | 40 | PVC | PP | LDPE |
| Intumeszenzadditiv | 35 | V-Graphit | V-Graphit | X-69 |
| Flammhemmer | 15 | EDAP | X-69 | V-Graphit |
| Anorg. Pigment | 10 | ChinaClay | ChinaClay | ChinaClay |

| Profilteil B nicht intumeszierend | | | | |
|---|---|---|---|---|
| Bindemittel | 95 | WeichPVCEvatane28-25 | | LDPE |
| Anorg.Pigment | 5 | Bayferrox140 Bayferrox140 Bayferrox140 | | |

### Extrusionsbedingungen:

**Extruder A:**

| | | | |
|---|---|---|---|
| Temperatur [°C] | 130 | 180 | 150 |
| Upm | 60 | 55 | 50 |
| Durchsatz kg/h | 14 | 12 | 12 |

**Extruder B**

| | | | |
|---|---|---|---|
| Temperatur [°C] | 150 | 100 | 150 |
| Upm | 25 | 30 | 30 |
| Durchsatz kg/h | 9,5 | 8 | 8 |

### Beispiele 12+13:

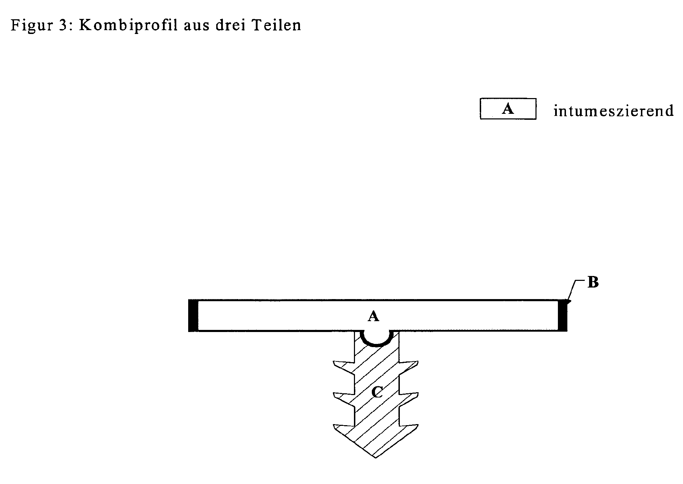

Durch Koextrusion wurden volle Klippprofile aus drei Teilen hergestellt, bei denen nur Teil A eine Intumeszenz zeigte. (**Kombiprofil gemäß Figur 3**):

| Beispiel | | 12 | 13 |
|---|---|---|---|
| Profilteil A intumeszierend | | | |
| | Gew.% | | |
| Bindemittel | 40 | PVC | PP |
| Intumeszenzadditiv | 35 | V-Graphit | V -Graphit |
| Flammhemmer | 15 | APP | EDAP |
| Anorg. Pigment | 10 | Wollastonit | ChinaClay |

| Profilteil B nicht-intumeszierend | | | |
|---|---|---|---|
| Bindemittel | 95 | PVC | PP |
| Anorg.Pigment | 5 | TiO₂ | Fe₂O₃ |

| Profilteil C nicht-intumeszierend | | | |
|---|---|---|---|
| Bindemittel | 75 | WeichPVC | Evatane28-25 |
| Anorg.Pigment | 5 | Ruß | Ruß |
| Flammhemmer | 20 | EDAP | EDAP |

### Laufgeschwindigkeit 3m/min

### Extrusionsbedingungen:

**Extruder A:**

| | | |
|---|---|---|
| Temperatur [°C] | 130 | 150 |
| Upm | 50 | 40 |
| Durchsatz kg/h | 8,5 | 6,5 |

**Extruder B**

| | | |
|---|---|---|
| Temperatur [°C] | 140 | 170 |
| Upm | 20 | 20 |
| Durchsatz kg/h | 0,5 | 0,4 |

**Extruder C**

| | | |
|---|---|---|
| Temperatur [°C] | 140 | 170 |
| Upm | 20 | 20 |
| Durchsatz kg/h | 6,5 | 5,0 |

## Patentansprüche

1. Intumeszierende, gegen Umwelteinflüssen unempfindliche, volle Kippprofile, **dadurch gekennzeichnet, dass** sie aus einem intumeszierenden Material bestehen, das eine Kombination von gegen Umwelteinflüsse unempfindlichen Intumeszenzadditiven; Flammhemmern und Thermoplasten enthält, wobei das Ganze oder Teile des Klippprofils aus dem intumeszierenden Material bestehen.

2. Klippprofile nach Anspruch 1, **dadurch gekennzeichnet, dass** als gegen Umwelteinflüsse unempfindliche Intumeszenzadditive V-Graphit, V-Vermikulit, Rohvermikulit oder Gemische derselben oder Gemische aus Melamin oder Melaminverbindungen, Phosphaten und mehrwertigen Alkoholen eingesetzt werden.

3. Klippprofile nach Anspruch 1, **dadurch gekennzeichnet, dass** als Thermoplaste hart Thermoplaste aus der Gruppe Hart-PVC, Polypropylen, Polyethylen, Acryl-Butadien-Styrol-Copolymere, Polymethylmetacrylat oder Polystyrol, oder weiche Thermoplaste aus der Gruppe Weich-PVC, Ethylenvinylacetat, SBR-Kautschuke, thermoplastische Olefine, Pebax, Santoprene, Kariflex und Polybutadiene eingesetzt werden.

4. Klippprofile nach Anspruch 1, **dadurch gekennzeichnet, dass** als Flammhemmer halogenfreie Flammhemmer aus der Gruppe Ethylendiaminphosphat, sek. Guanidinphosphat, Ammoniumdihydrogenphosphat, Ammoniumpolyphosphat oder Piperazinphosphat, oder V-Graphit, eingesetzt werden.

5. Klippprofile nach Anspruch 1, **dadurch gekennzeichnet, dass** sie gegebenenfalls anorganische Pigmente aus der Gruppe der Eisenoxide, Titanoxid, Ruß, Kaolin, Kreide, Calciumsilikate, Calciumsulfate, Gips, Gipshalbhydrat und Tone enthalten können.

6. Klippprofile nach Anspruch 1, **dadurch gekennzeichnet, dass** sich die intumeszierende Masse aus 40 - 75 Gew.% an Thermoplaste, 20 - 40Gew.% an Intumeszenzadditiven, 5 - 30 Gew.% an Flammhemmer und 0 - 15 Gew. % an anorganischen Pigmenten zusammensetzt.

7. Klippprofile nach Anspruch 1, **dadurch gekennzeichnet, dass** sie zur Gänze aus dem intumeszierenden Material bestehen, oder dass sie aus zwei oder mehreren Teilen bestehen, wobei zumindest ein Teil Intumeszenz zeigt und die anderen Teile keine Intumeszenzadditive enthalten.

8. Klippprofile nach Anspruch 8, **dadurch gekennzeichnet, dass** für die intumeszierenden Teile und die nicht intumeszierenden Teile die gleichen oder verträgliche Thermoplaste eingesetzt werden.

9. Klippprofile nach Anspruch 8, **dadurch gekennzeichnet, dass** die nicht intumeszierenden Teile aus 50 - 100 Gew. % an Thermoplast, 0 - 20 Gew.% an anorg. Pigment und 0 -30 Gew.% an Flammhemmer bestehen.

10. Verfahren zur Herstellung von Klippprofilen nach Anspruch 1 oder 8, **dadurch gekennzeichnet**, das Klippprofile, die zur Gänze aus dem intumeszierenden Material bestehen durch Extrusion und solche, bei denen nur Teile aus dem intumeszierenden Material bestehen durch Koextrusion hergestellt werden.

11. Verwendung von Klippprofilen nach Anspruch 1 in Brandschutzeinrichtungen oder -fugen.
